# EUROPÄISCHE PATENTSCHRIFT

(11) **EP 0 734 186 B1**
(45) Veröffentlichungstag und Bekanntmachung des Hinweises auf die Patenterteilung: **16.04.2003**
(21) Anmeldenummer: 96102941.0
(22) Anmeldetag: 28.02.1996
(51) Int. Cl.: H04Q 3/62, H04Q 11/04, H04Q 3/60, H04L 29/06

(54) **Verfahren zum Steuern eines Zugangsnetzes sowie Zugangsnetze und Vermittlungsstelle dafür**
Method for controlling an access network and an access network and an exchange therefor
Procédé pour commander un réseau d'accès ainsi qu'un réseau d'accès et un central pour cela

(30) Priorität: 18.03.1995 DE 19509965
(43) Veröffentlichungstag der Anmeldung: 25.09.1996
(73) Patentinhaber: ALCATEL, 75008 Paris (FR)
(72) Erfinder: Khakzar, Karim, Dr., 1933 Sterrebeek (DE)
(74) Vertreter: Knecht, Ulrich Karl, Dipl.-Ing.

(56) Entgegenhaltungen:
- GB-A- 2 014 018
- US-A- 5 274 634
- CHANG SOO SONE ET AL: "TDX-10: A FLEXIBLE SWITCHING ARCHITECTURE FOR ISDN" PROCEEDINGS OF THE REGION TEN INTERNATIONAL CONFERENCE. (TENCON), Bd. CONF. 4, 22. - 24. November 1989, Seite 34-37 XP000203827 BOMBAY, INDIA
- SKARPERDA N: "EWSD HEUTE: GEWACHSENE LEISTUNGSVIELFALT" NACHRICHTENTECHNIK ELEKTRONIK,DE,VEB VERLAG TECHNIK., Bd. 41, Nr. 2, 1. März 1991 (1991-03-01), Seite 56-59 XP000225602 BERLIN, DE ISSN: 0323-4657
- KHAKZAR K: "V5 INTERFACES BETWEEN DIGITAL LOCAL EXCHANGES AND ACCESS NETWORKS" FREQUENZ,DE,SCHIELE UND SCHON GMBH., Bd. 48, Nr. 1/02, 1. Januar 1994 (1994-01-01), Seite 44-50 XP000439913 BERLIN, DE ISSN: 0016-1136

## Beschreibung

Die Erfindung betrifft ein Verfahren zum Steuern eines physikalischen Zugangsnetzes, ein physikalisches Zugangsnetz und eine Vermittlungsstelle.

Vor allem bei der Verwendung von optischer Nachrichtenübertragung im, Teilnehmeranschlußbereich ist man bestrebt, Teilnehmer nicht direkt, sondern über ein konzentrierendes Zugangsnetz an eine Vermittlungsstelle anzuschließen.

Die Erfindung geht nun von einem hierfür konzipierten Zugangsnetz aus, dessen prinzipieller Aufbau beispielsweise dem eines Zugangsnetzes entspricht, das über eine von ETSI spezifizierte V5.2 Schnittstelle mit einer Vermittlungsstelle verbunden ist. Deren Funktionsweise wird in der Spezifikation "pr ETS 300 347-1, Final Draft, Signalling Protocolls and Switching, V5-Interface for Support of Access Network, Part I: V5.2 Interface Specification" vom April 1994 beschrieben.

Bei der V5.2 Schnittstelle ist ein logisches Zugangsnetz über bis zu 16 physikalische Verbindungsleitungen mit einer Vermittlungsstelle verbunden. Ein physikalisches Zugangsnetz bildet hierbei die Basis für ein oder für mehrere solcher logischer Zugangsnetze. Das logische Zugangsnetz stellt hierbei die Teilnehmeranschlußeinrichtungen bereit und die Vermittlungsstelle führt sämtliche vermittlungstechnischen und diensterelevanten Aufgaben durch.

Der Artikel "V5 interfaces between digital local exchanges and access networks" von K. Khakzar, Frequenz, De, Schiele und Schon GmbH, Bd 48, Nr 1/02 beschreibt die Struktur von V5 Schnittstellen sowie die verschiedenen von ETSI definierten Protokolle, die über die V5 Schnittstelle ablaufen. Das BCC (Bearer Channel Connection) Protokoll, das dazu dient, Nutzkanäle zu den verschiedenen Nutzdatenverbindungen dynamisch zuzuordnen, ist näher beschrieben.

Für den Datenaustausch zwischen der Vermittlungsstelle und dem logischen Zugangsnetz stehen auf jeder der bis zu 16 physikalischen Verbindungsleitungen eine Vielzahl von Übertragungskanälen und mehrere Steuerkanäle zur Verfügung. Über diese Steuerkanäle werden Nachrichten ausgetauscht, die der transparenten Übertragung von ISDN-Signalisierungsinformation und ISDN-D-Kanal-Paketdaten (ISDN= Integrated Services Digital Network) dienen oder einem von fünf Protokollen zugeordnet sind und so jeweils mit einer protokollspezifischen Kennung versehen sind. Jedes dieser Protokolle erfüllt eine ganz bestimmte Aufgabe, wobei vier der Protokolle der Steuerung des logischen Zugangsnetzes durch die Vermittlungsstelle dienen. Diese vier Protokolle dienen der dynamischen Zuteilung der Übertragungskanäle zu Teilnehmeranschluß-Kanälen, der Steuerung der Betriebszustände der physikalischen Verbindungsleitungen, der Steuerung der Betriebszustände der Teilnehmeranschlußeinrichtungen bzw. der Sicherung der Steuerkanäle bei Ausfall von physikalischen Verbindungsleitungen. Mittels der so zur Verfügung stehenden Nachrichtensätze ist es möglich, alle wichtigen Funktionen des Zugangsnetzes von der Vermittlungsstelle aus auf einfache Weise zu steuern. Das fünfte Protokoll dient der Übertragung von PSTN-Signalisierungsinformationen (PSTN = Public Switched Telephone Network) für analoge Teilnehmeranschlüsse.

Alle vermittlungstechnischen und diensterelevanten Aufgaben verbleiben so in der Vermittlungsstelle und das logische Zugangsnetz ist unabhängig von der herstellerspezifischen Realisierung vermittlungstechnischer Funktionen.

Weiter kann mittels des Protokolls zur dynamischen Zuteilung der Übertragungskanäle zu Teilnehmeranschluß-Kanälen der Verkehr von allen dem logischen Zugangsnetz zugeordneten Teilnehmern auf die bis zu 16 physikalischen Verbindungsleitungen konzentriert werden. Dadurch erreicht man eine sehr effiziente und wirtschaftliche Ausnutzung der Bandbreite der Verbindungsleitungen.

Die Anbindung eines Zugangsnetzes durch eine oder mehrere solcher Schnittstellen erfordert jedoch aufgrund deren hoher Komplexität einen großen hard- und softwaremäßigen Aufwand.

Weiter sind sehr einfach konzipierte Zugangsnetze bekannt, deren prinzipieller Aufbau beispielsweise dem eines Zugangsnetzes entspricht, das über eine von ETSI spezifizierte V5.1 Schnittstelle mit einer Vermittlungsstelle verbunden ist. Deren Funktionsweise wird in der Spezifikation "pr ETS 300 324-1, Final Draft, Signalling Protocolls and Switching, V5-Interface for Support of Access Network, Part I: V5.1 Interface Specification" vom Januar 1994 beschrieben.

Bei der V5.1 Schnittstelle ist ein logisches Zugangsnetz über eine physikalischen Verbindungsleitung mit der Vermittlungsstelle verbunden. Es existiert kein Protokoll für dynamische Zuteilung von Übertragungskanälen zu Teilnehmeranschluß-Kanälen. Die Teilnehmeranschluß-Kanäle werden den Nutzkanälen fest zugeordnet. Dadurch ist die maximale Anzahl der anschließbaren Teilnehmer stark eingeschränkt (z.B. max. 30 analoge Teilnehmer).

Der Erfindung liegt nun die Aufgabe zugrunde, den Aufwand für den Anschluß von Teilnehmern an ein Zugangsnetz der obigen zuerst angeführten Konzeption zu verringern.

Diese Aufgabe wird gelöst durch ein Verfahren nach der Lehre von Anspruch 1, , durch ein physikalisches Zugangsnetz nach der Lehre von Anspruch 5 und durch eine Vermittlungsstelle nach der Lehre von Anspruch 6.

Die Erfindung beruht auf der Erkenntnis, daß sich bereits auf einer einzigen physikalischen Verbindungsleitung ein sehr großer Verkehrs-Konzentrationseffekt erzielen läßt und daß bei nur einer physikalischen Verbindungsleitung ein Großteil der Komplexität eines Zugangsnetzes der obigen ersten Konzeption entfällt, da diese sich im wesentlichen aus der Konfiguration mit mehreren Verbindungsleitungen ergibt. Der Bündelungsgewinn verringertsich so zwar um 10 % bis 30 %, das Zugangsnetz hat jedoch eine wesentlich geringere Komplexität.

Die Grundidee der Erfindung ist, ein logisches Zugangsnetz über nur eine physikalische Verbindungsleitung an das Zugangsnetz anzuschließen und für die Steuerung des Zugangsnetzes nur zwei Protokolle zu verwenden, von denen das eine der Kontrolle und Steuerung der Teilnehmeranschlußeinrichtungen und das andere der dynamischen Zuteilung von Nutzkanälen der Verbindungsleitung zu Teilnehmeranschluß-Kanälen dient. Hierdurch ist es möglich, nur einen der Übertragungskanäle der Verbindungsleitung als Steuerkanal vorzusehen und aufgrund der geringeren Komplexität den hard- und softwaremäßigen Aufwand in der Vermittlungsstelle und im Zugangsnetz zu verringern.

Ein Vorteil der Erfindung ist, daß im Vergleich zu einem Anschlußnetz nach der obigen zweiten Konzeption (V5.1 Schnittstelle) wesentlich mehr Teilnehmer über eine einzelne Verbindungsleitung an eine Vermittlungsstelle angeschlossen werden können. Gegenüber einem Anschlußnetz nach der obigen ersten Konzeption (V5.2 Schnittstelle) ist der zulässige Verkehr pro physikalischer Verbindungsleitung zwar unwesentlich geringer, die Komplexität ist jedoch erheblich kleiner. Im Vergleich mit beiden Konzeptionen ergeben sich somit Kostenvorteile.

Vorteilhafte Ausgestaltungen der Erfindung sind den Unteransprüchen zu entnehmen.

Es ist hierbei insbesondere vorteilhaft bei einem physikalischen Zugangsnetz auf dem mehrere logische Zugangsnetze basieren eines oder mehrere der logischen Zugangsnetze im Stand-by-Modus zu betreiben. Hierdurch ist die Verfügbarkeit auch bei Ausfall eines der logischen Zugangsnetze gegeben.

Im folgenden wird die Erfindung anhand eines Ausführungsbeispiels unter Zuhilfenahme der beiliegenden Zeichnungen weiter erläutert:
- Fig. 1: zeigt eine symbolische Darstellung eines erfindungsgemäßen physikalischen Zugangsnetzes und einer erfindungsgemäßen Vermittlungsstelle.
- Fig. 2: zeigt ein detailliertes Blockschaltbild des erfindungsgemäßen physikalischen Zugangsnetzes nach Fig. 1 und der erfindungsgemäßen Vermittlungsstelle nach Fig. 1.

Im folgenden wird die Anwendung der erfindungsgemäßen Verfahren zum Steuern eines physikalischen Zugangsnetzes in einem Kommunikationssystem aufgezeit, in dem ein erfindungsgemäßes physikalischen Zugangsnetz, auf dem mehrere logische Zugangsnetze basieren, mit einer erfindungsgemäßen Vermittlungsstelle verbunden ist.

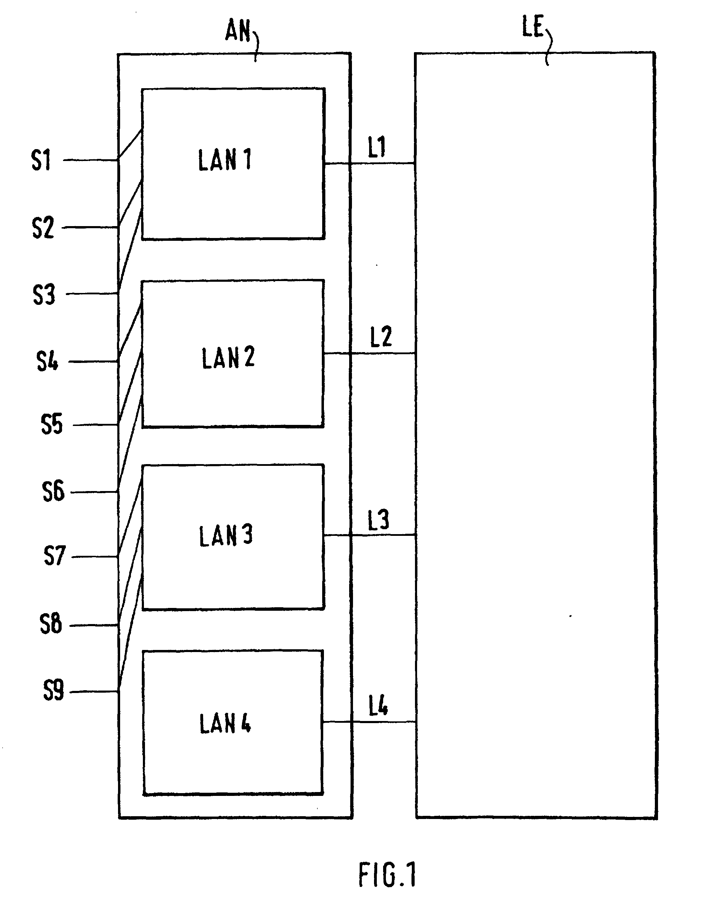

Fig. 1 zeigt neun Endgeräte S1 bis S9, ein physikalisches Zugangsnetzes AN mit vier logischen Zugangsnetzen LAN1 bis LAN4 und eine Vermittlungsstelle LE. Die logischen Zugangsnetze LAN1 bis LAN3 sind mit den Endgeräten S1 bis S3, S4 bis S6, bzw. S7 bis S9 und über die Verbindungsleitungen L1, L2, bzw. L3 mit der Vermittlungsstelle LE verbunden. Das logische Zugangsnetz LAN4 ist zwar über die Verbindungsleitung L4 mit der Vermittlungsstelle LE, aber ansonsten mit keinem Endgerät verbunden.

Bei den Endgeräten S1 bis S9 handelt es sich um Fernsprechendgeräte, wobei es sich bei den Endgeräten S1 bis S5 um analoge Fernsprechgeräte und bei den Endgeräten S6 bis S9 um ISDN-Fernsprechgeräte handelt. Es ist auch möglich, ein sonstiges Endgeräte wie beispielsweise einen Computer für die Datenkommunikation oder eine Nebenstellenanlage anstelle eines der Endgeräte S1 bis S9 zu verwenden. Die Zahl der an die einzelnen logischen Zugangsnetze LAN1 bis LAN3 angeschlossenen Endgeräte und deren Zuordnung zu den logischen Zugangsnetzen LAN1 bis LAN3 ist hier beispielhaft gewählt.

Jede der Verbindungsleitungen L1 bis L4 stellt 31 Übertragungskanäle je 64 Kbit/s zur Verfügung, von dem jeweils ein Kanal als Steuerkanal und der Rest als Nutzkanäle dient.

Das physikalische Zugangsnetz AN ist vorzugsweise von der Vermittlungsstelle LE räumlich abgesetzt und wird von dieser gesteuert. Es stellt die Teilnehmeranschlußeinrichtungen für die Endgeräte S1 bis S9 bereit und führt zusammen mit der Vermittlungsstelle LE den Verbindungsaufbau und -abbau für die Endgeräte S1 bis S9 durch. Auf dem physikalischen Zugangsnetz AN basieren die vier logischen Zugangsnetze LAN1 bis LAN4.

Die logischen Zugangsnetze LAN1 bis LAN4 nutzen gemeinsam die Betriebsmittel des physikalischen Zugangsnetzes AN. Jedem der logischen Zugangsnetze LAN1 bis LAN4 ist eine Gruppe von Endgeräten und eine Verbindungsleitung zur Vermittlungsstelle LE zugeordnet. So sind dem logischen Zugangsnetz LAN1 die Endgeräte S1 bis S3 und die Verbindungsleitung L1, dem logischen Zugangsnetz LAN2 die Endgeräte S4 bis S6 und die Verbindungsleitung L2, dem logischen Zugangsnetz LAN3 die Endgeräte S7 bis S9 und die Verbindungsleitung L3 und dem logischen Zugangsnetz LAN4 die Verbindungsleitung L4 zugeordnet.

Es ist auch möglich, daß die logischen Zugangsnetze LAN1 bis LAN4 die Betriebsmittel des physikalischen Zugangsnetzes AN nicht gemeinsam benutzen, sondern daß jedem der logischen Zugangsnetze LAN1 bis LAN4 eigene Betriebsmittel zugeordnet sind.

Jedes der logischen Zugangsnetze LAN1 bis LAN4 wird separat von der Vermittlungsstelle LE gesteuert und führt nur Funktionen für die ihm zugeordneten Endgeräte durch. Die logischen Zugangsnetze LAN1 bis LAN3 werden hierbei von der Vermittlungsstelle LE auf gleiche Weise und das logische Zugangsnetz LAN4 auf etwas abgewandelte Weise gesteuert, da dieses logische Zugangsnetz noch zusätzliche Funktionen zu erfüllen hat.

Fällt eines der logischen Zugangsnetze LAN1 bis LAN3 oder eine der diesen logischen Zugangsnetzen zugeordneten physikalischen Verbindungsleitungen L1 bis L3 aus, so wird dies von der Vermittlungsstelle LE erkannt. Diese sendet sodann Nachrichten an das logische Zugangsnetz LAN4, das daraufhin die Endgeräte des ausgefallenen logischen Zugangsnetzes übernimmt und für dessen Teilnehmer alle Funktionen eines zugeordneten logischen Zugangsnetzes durchführt.

Es ist auch möglich, daß auf dem physikalischen Zugangsnetz AN eine andere Anzahl von logischen Zugangsnetzen basieren oder nur ein einziges logisches Zugangsnetz auf dem physikalischen Zugangsnetz AN basiert und somit das logische dem physikalischen Zugangsnetz entspricht. Weiter ist es möglich, daß den logischen Zugangsnetzen die Endgeräte fest zugeordnet sind, d.h. beispielsweise, daß nur die logischen Zugangsnetze LAN1 bis LAN3 auf dem physikalischen Zugangsnetz AN basieren, und so im Fehlerfall keine Übernahme der betroffenen Endgeräte durch ein anderes logisches Zugangsnetz erfolgt.

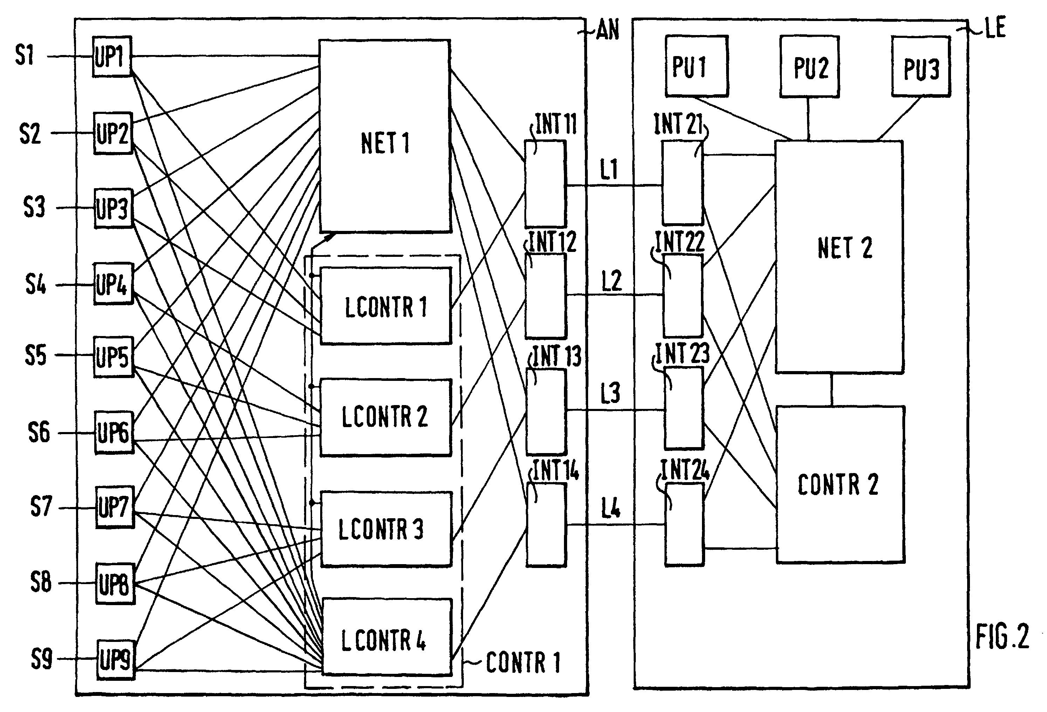

Im folgenden wird nun der genauere Aufbau des physikalischen Zugangsnetzes AN und der Vermittlungsstelle LE anhand von Fig. 2 beschrieben.

Fig. 2 zeigt die Endgeräte S1 bis S9, das physikalische Zugangsnetz AN und die Vermittlungsstelle LE.

Das physikalische Zugangsnetz AN weist 9 Teilnehmeranschlußeinrichtungen UP1 bis UP9, vier Schnittstelleneinrichtungen INT11 bis INT14, ein Koppelnetz NET1 und eine Steuereinrichtung CONTR1 auf, die von vier logischen Steuereinrichtungen LCONTR1 bis LCONTR4 gebildet wird.

Die Teilnehmeranschlußeinrichtungen UP1 bis UP9 sind jeweils mit dem Koppelnetz NET1 und mit den Endgeräten S1, S2, S3, S4, S5, S6, S7, S8, bzw. S9 verbunden. Die Schnittstelleneinrichtungen INT11 bis INT14 sind jeweils mit dem Koppelnetz NET1 und über die Verbindungsleitungen L1, L2, L3, bzw. L4 mit der Vermittlungsstelle LE verbunden. Die logischen Steuereinrichtungen LCONTR1 bis LCONTR4 tauschen Daten mit den Teilnehmeranschlußeinrichtungen UP1 bis UP3, UP4 bis UP6, UP7 bis UP9 bzw. UP1 bis UP9 und mit den Schnittstelleneinrichtungen INT11, INT12, INT13, bzw. INT14 aus. Weiter senden die logischen Steuereinrichtungen LCONTR1 bis LCONTR4 jeweils Steuerbefehle an das Koppelnetz NET1.

Die Teilnehmeranschlußeinrichtungen UP1 bis UP9 stellen jeweils den Teilnehmeranschluß für die Endgeräte S1 bis S9 zur Verfügung und leiten den jeweiligen Nutzkanal an das Koppelnetz NET1 weiter.

Es ist hierbei auch möglich, daß die Teilnehmeranschlußeinrichtungen UP1 bis UP9 ein höherbitratigen Anschluß, beispielsweise einen 2Mbit/s-Anschluß zur Verfügung stellen oder eine logische Schnittstelle zu einem Teilnehmer bereitstellen, die u.U. aus mehreren physikalischen Schnittstellen besteht.

Das Koppelnetz NET1 hat eine Matrixstruktur. Mit ihm werden die Nutzkanäle von den Teilnehmeranschlußeinrichtungen UP1 bis UP9 mit den Nutzkanälen der Schnittstelleneinrichtungen INT11 bis INT14 verkoppelt. Das Durchschalten solcher Verbindungen durch das Koppelnetz NET1 wird hierbei von den logischen Steuereinrichtungen LCONTR1 bis LCONTR4 und indirekt von der Vermittlungsstelle LE gesteuert.

Es ist auch möglich, daß das Koppelnetz NET1 eine andere Struktur hat, beispielsweise von einem Bus gebildet wird, auf den mit einem verteilten Zugriffsverfahren zugegriffen wird.

Die Schnittstelleneinrichtungen INT11 bis INT14 stellen die für die Datenübertragung über die Verbindungsleitung L1, L2, L3 bzw. L4 notwendigen Grundübertragungsdienste bereit. Darüberhinaus trennen sie die Nutz- von den Steuerkanälen und stellen eine Verbindung der Nutzkanäle der Verbindungsleitungen L1, L2, L3 bzw. L4 mit dem Koppelnetz NET1 und der Steuerkanäle der Verbindungsleitungen L1, L2, L3, bzw. L4 mit den logischen Steuereinrichtungen LCONTR1, LCONTR2, LCONTR3, bzw. LCONTR4 bereit.

Es ist hierbei auch möglich, daß die Steuerkanäle über das Koppelnetz NET1 mit den logischen Steuereinrichtungen LCONTR1 bis LCONTR4 verbunden sind. Auch der Datenaustausch zwischen den logischen Steuereinrichtungen LCONTR1 bis LCONTR4 und den Teilnehmeranschlußeinrichtungen UP1 bis UP9 könnte über das Koppelnetz NET1 geführt werden.

Die Steuereinrichtung CONTR1 wird von einem Rechner mit entsprechenden peripheren Komponenten gebildet. Die logischen Steuereinrichtungen LCONTR1 bis LCONTR4 werden von Prozessen gebildet, die auf diesem Rechner ablaufen und so gemeinsam dessen Betriebsmittel nutzen.

Es ist auch möglich, daß jede der logischen Steuereinrichtungen LCONTR1 bis LCONTR4 von einem unabhängigen Rechner mit entsprechender Software oder von einer sonstigen logischen Steuerschaltung gebildet wird.

Jede der logischen Steuereinrichtungen LCONTR1 bis LCONTR4 steuert den Verbindungsaufbau der ihr zugeordneten Endgeräte. Hierfür empfängt sie Zustandsdaten von den Teilnehmeranschlußeinrichtungen der ihr zugeordneten Endgeräte und steuert diese sowie das Koppelnetz NET1, das sie zum Aufbau von Verbindungen zwischen den ihr zugeordneten Endgeräten und einem von der Vermittlungsstelle LE gewählten Nutzkanal auf der ihr zugeordneten Verbindungsleitung veranlaßt. Weiter tauscht sie über die ihr zugeordnete Schnittstelleneinrichtung Nachrichten mit der Vermittlungsstelle LE aus, mittels derer sie ihrerseits von der Vermittlungsstelle LE gesteuert wird.

Die Vermittlungsstelle LE weist vier Schnittstelleneinrichtungen INT21 bis INT24, ein Koppelnetz NET2, eine Steuereinrichtung CONTR2 und drei Einrichtungen PU1 bis PU3 auf.

Die Schnittstelleneinrichtungen INT21 bis INT24 sind über die Verbindungsleitungen L1, L2, L3, bzw. L4 mit dem physikalischen Zugangsnetz AN verbunden und tauschen jeweils Daten mit dem Koppelnetz NET2 aus. Die Steuereinrichtung CONTR2 tauscht Daten mit den Schnittstelleneinrichtungen INT21 bis INT24 aus und sendet Steuerbefehle an das Koppelnetz NET2. Die Einrichtungen PU1 bis PU3 tauschen Daten mit dem Koppelnetz NET2 aus.

Die Schnittstelleneinrichtungen INT21 bis INT24 stellen die Grundübertragungsdienste für die Verbindungsleitungen L1, L2, L3, bzw. L4 zur Verfügung. Darüberhinaus verbinden sie die Nutzkanäle der Verbindungsleitungen L1, L2, L3, bzw. L4 mit dem Koppelnetz NET2 und deren Steuerkanäle mit der Steuereinrichtung CONTR2.

Die Einrichtungen PU1 bis PU3 sind Anschlußeinrichungen, beispielsweise Anschlußeinrichtungen für analoge oder digitale Teilnehmer, für Übertragungsleitungen zu anderen Vermittlungsstellen, für Takte und Töne oder für MFT-Signalisierung (MFT = Mehrfrequenzton). Die Zahl von drei Einrichtungen PU1 bis PU3 ist hier beispielhaft gewählt.

Das Koppelnetz NET2 ist ein übliches Koppelnetz für eine Vermittlungsstelle. Es stellt auf ein Steuersignal von der Steuereinrichtung CONTR2 Verbindungen zwischen Nutzkanälen der Verbindungsleitungen L1 bis L4 und zwischen solchen Nutzkanälen und den Einrichtungen PU1 bis PU3 zur Verfügung.

Der mögliche Aufbau des Koppelnetzes NET2 und der Einrichtungen PU1 bis PU3 kann beispielhaft dem Artikel "Hardwarestruktur", S. 135 bis 147 der Zeitschrift "Elektrisches Nachrichtenwesen", Band 58, Nr. 2/3, 1981, entnommen werden.

Die Steuereinrichtung CONTR2 steuert das physikalische Zugangsnetz AN und den Verbindungsaufbau für die Endgeräte S1 bis S9 des physikalischen Zugangsnetzes AN. Hierfür tauscht sie über die Schnittstelleneinrichtungen INT21 bis INT24 Nachrichten mit den logischen Steuereinrichtungen LCONTR1 bis LCONTR4 aus und nimmt so auf sämtliche Funktionen der entsprechenden logischen Zugangsnetze LAN1 bis LAN4 Einfluß.

Weiter veranlaßt sie den Aufbau entsprechender Verbindungen durch das Koppelnetz NET2. Die Software für die Steuereinrichtung CONTR2 kann hierbei auf einen Rechner konzentriert oder auf mehrere Rechner verteilt werden.

Bei einem Verbindungsaufbau, der beispielsweise von dem Endgerät S1 des logischen Zugangsnetzes LAN1 initiierten wird, werden so von der Vermittlungsstelle LE und dem physikalischen Zugangsnetz AN folgende Schritte durchgeführt:

Der Teilnehmer beim Endgerät S1 hebt ab und dies wird von der logischen Steuereinrichtung LCONTR1 der Steuereinrichtung CONTR2 gemeldet. Diese sendet daraufhin an die Steuereinrichtung LCONTR1 eine Nachricht, mittels der sie diese veranlaßt, eine Verbindung zwischen dem Endgerät S1 und der Vermittlungsstelle LE über einen in der Nachricht bestimmten Nutzkanal der Verbindungsleitung L1 aufzubauen. Die Wahlinformation vom Teilnehmer wird sodann in der Vermittlungsstelle LE ausgewertet und anschließend die Verbindung zu dem gerufenem Teilnehmer über das Koppelnetz NET2 aufgebaut.

Im folgenden wird nun der für die Steuerung eines der logischen Zugangsnetze LAN1 bis LAN3 erforderlicher Nachrichtenaustausch anhand des Nachrichtenaustausches zwischen der logischen Steuereinrichtung LCONTR2 und der Steuereinrichtung CONTR2 beispielhaft erläutert.

Das logische Zugangsnetz LAN2 wird von der Vermittlungsstelle LE mittels zweier Protokolle gesteuert, deren Nachrichten über den Steuerkanal der Verbindungsleitung L2 ausgetauscht werden.

Das erste Protokoll dient der dynamischen Zuteilung von Nutzkanälen auf der Verbindungsleitung L2 zu den Endgeräten S4 bis S6. Dieses Protokoll wird von einem Satz von Nachrichten gebildet, die sich durch eine spezielle Kennung von den übrigen über den Steuerkanal der Verbindungsleitung L2 ausgetauschten Nachrichten unterscheiden. Dieses Protokoll enthält Nachrichten, mittels denen die Steuereinrichtung CONTR2 die logische Steuereinrichtung LCONTR2 auffordert, eine einer solchen Zuordnung entsprechende Verbindung durch das Koppelnetz NET1 aufzubauen oder abzubauen. Zum anderen sind Nachrichten vorgesehen, mittels denen die logische Steuereinrichtung LCONTR2 die Durchführung einer solchen Anforderung bestätigt.

Das zweite Protokoll dient der Kontrolle und Steuerung der Teilnehmeranschlußeinrichtungen UP4 bis UP6. Dieses Protokoll wird ebenfalls von einem Satz von Nachrichten gebildet, die jeweils eine für dieses Protokoll spezifische Kennung tragen. Es sind hierbei Nachrichten vorgesehen, mittels denen die Zustände der Teilnehmeranschlußeinrichtungen UP4 bis UP6 an die Steuereinrichtung CONTR2 gemeldet oder von dieser verändert werden können. Weiter sind entsprechende Bestätigungsnachrichten vorgesehen.

Zusätzlich zu den Nachrichten dieser beiden Protokolle werden über den Steuerkanal der Verbindungsleitung L2 noch Nachrichten zwischen der logischen Steuereinrichtung LCONTR2 und der Steuereinrichtung CONTR2 ausgetauscht, die der Steuerung der Teilnehmersignalisierung für die Endgeräte S4 bis S6 dienen. Die Signalisierung für die analogen Teilnehmeranschlußeinrichtungen S4 und S5 erfolgt hierbei durch ein weiteres Protokoll. Mittels dieses Protokolls werden die Zustände auf den entsprechenden Teilnehmeranschlußleitungen der Steuereinrichtung CONTR2 gemeldet und von dieser das Senden von Signalisierungssignalen angefordert, also beispielsweise das Anlegen des Rufstromes veranlaßt. Darüberhinaus wird der für die Signalisierung zuständige ISDN-D-Kanal von dem ISDN-Endgerät S6 mittels spezieller Nachrichten annähernd transparent über den Steuerkanal von der logischen Steuereinrichtung LCONTR2 zur Steuereinrichtung CONTR2 übertragen.

Es ist auch möglich, weitere Kanäle auf der Verbindungsleitung L2 für die Übertragung von ISDN-D-Kanal-Paket-Daten einzurichten.

Zusätzlich zu den von der logischen Steuereinrichtung LCONTR2 verwendeten Nachrichten werden für die Kommunikation zwischen der logischen Steuereinrichtung LCONTR4 und der Steuereinrichtung CONTR2 noch weitere Nachrichten verwendet, die einem weiteren Protokoll zur Steuerung des logischen Zugangsnetzes LAN4 zugeordnet sind. Die Nachrichten können aber auch Teil des Protokolls zur Steuerung der Teilnehmeranschlußeinrichtungen sein.

Dieses Protokoll dient dazu, beim Ausfall einer der logischen Zugangsnetze LAN1 bis LAN3 oder der entsprechenden der Verbindungsleitungen L1 bis L3 deren Endgeräte über das logische Zugangsnetz LAN4 an die Vermittlungsstelle LE anzubinden. Dieses Protokoll wird von einem Satz von Nachrichten gebildet, die mit einer protokollspezifischen Kennung versehen sind und bestimmte Endgeräte des physikalischen Zugangansnetzes AN dem logischen Zugangsnetz LAN4 zuordnen. Beim Empfang einer solchen Nachricht übernimmt die logische Steuereinrichtung LCONTR4 die Funktion der dem ausgefallenen logischen Zugangsnetz oder der ausgefallenen physikalischen Verbidungsleitung zugeordneten logischen Steuereinrichtung. Sie übernimmt somit die Kontrolle und Steuerung über die diesem ausgefallenen logischen Zugangsnetz oder dieser ausgefallenen Verbindungsleitung zugeordneten Teilnehmeranschlußeinrichtungen und schaltet für diese die geforderten Verbindungen durch das Koppelnetz NET1.

## Patentansprüche

1. Verfahren zum Steuern eines physikalischen Zugangsnetzes (AN) mit einer Vielzahl von Teilnehmeranschlußeinrichtungen (UP1 bis UP9) durch eine Vermittlungsstelle (LE), bei dem das physikalische Zugangsnetz (AN) die Basis für mehrere gleichartige logische Zugangsnetze (LAN1 bis LAN3) bildet,
die getrennt gesteuert werden und denen jeweils eine Gruppe der Teilnehmeranschlußeinrichtungen (UP1 bis UP3, UP4 bis UP6, UP7 bis UP9) zugeordnet wird, **dadurch gekennzeichnet,**
**dass** jedes der logischen Zugangsnetze (LAN1 bis LAN3) über eine einzige physikalische Verbindungsleitung (L1 bis L3) mit der Vermittlungsstelle (LE) verbunden wird, bei dem jedes der logischen Zugangsnetze (LAN1 bis LAN3) mit der Vermittlungsstelle (LE) über eine Vielzahl von Nutzkanälen Nutzdaten und über einen einzigen Steuerkanal Nachrichten austauscht, die der Übertragung von Daten oder der Steuerung des jeweiligen logischen Zugangsnetzes (LAN1 bis LAN3) dienen,
und bei dem zur Steuerung jedes der logischen Zugangsnetze (LAN1 bis LAN3) jeweils lediglich zwei Protokolle verwendet werden, die beide jeweils von einem Satz von Nachrichten zur Erfüllung einer speziellen Aufgabe gebildet werden, wobei die Zugehörigkeit einer Nachricht zu einem der beiden Protokolle als Bestandteil der Nachricht in der Nachricht eingetragen wird und das eine Protokoll der Kontrolle und Steuerung der Teilnehmeranschlußeinrichtungen (UP1 bis UP3, UP4 bis UP6, UP7 bis UP9) des jeweiligen logischen Zugangsnetzes (LAN1 bis LAN3) und das andere Protokoll der dynamischen Zuteilung von Nutzkanälen der physikalischen Verbindungsleitung (L1 bis L3) des jeweiligen logischen Zugangsnetzes (LAN1 bis LAN3) zu dessen Teilnehmeranschlußeinrichtungen (UP1 bis UP3, UP4 bis UP6, UP7 bis UP9) dient.

2. Verfahren nach Anspruch 1, **dadurch gekennzeichnet, daß** ein oder mehrere Nutzkanäle für die Übehrtragung von ISDN-D-Kanal-Paket-Daten verwendet werden.

3. Verfahren nach Anspruch 1, **dadurch gekennzeichnet, daß** auf dem physikalischen Zugangsnetz (AN) mindestens noch ein andersartiges, weiteres logisches Zugangsnetz (LAN4) basiert, dem bei Ausfall eines der gleichartigen logischen Zugangsnetze (LAN1 bis LAN3) oder der einem dieser logischen Zugangsnetze (LAN1 bis LAN3) zugehörigen physikalischen Verbindungsleitung (L1 bis L3) deren zugeordnete Teilnehmeranschlußeinrichtungen (UP1 bis UP3, UP4 bis UP6, UP7 bis UP9) zugeordnet werden.

4. Verfahren nach Anspruch 3, **dadurch gekennzeichnet, daß** das weitere logische Zugangsnetz (LAN4) mittels mehrerer Protokolle gesteuert wird und daß mittels eines dieser Protokolle die Umordnung der Teilnehmeranschlußeinrichtung (UP1 bis UP3, UP4 bis UP6, UP7 bis UP9) eines ausgefallenen logischen Zugangsnetze (LAN1 bis LAN3) zu dem weiteren logischen Zugangsnetz (LAN4) durch die Vermittlungsstelle (LE) gesteuert wird.

5. Physikalisches Zugangsnetz (AN), das in mindestens zwei logische Zugangsnetze (LAN1, ..., LAN3) mit einer Vielzahl von Teilnehmeranschlußeinrichtung an (UP1 bis UP3, ..., UP7 bis UP9) eingeteilt ist, **dadurch gekennzeichnet,**
**dass** jedes der mindestens zwei logischen, Zugangsnetze mit einer Vermittlungsstelle (LE) über eine einzige physikalische Verbindungsleitung (L1, ..., L3) verbindbar ist, wobei die Vermittlungsstelle (LE) und jedes der mindestens zwei logischen, Zugangsnetze (LAN1, ..., LAN3) über eine Vielzahl von Nutzkanälen Nutzdaten und über einen einzigen Steuerkanal Nachrichten austauschen, die der Übertragung von Daten oder der Steuerung jedes der mindestens zwei logischen, Zugangsnetze (LAN1, ..., LAN3) dienen, und wobei zur Steuerung jedes der mindestens zwei logischen, Zugangsnetze (LAN1, ..., LAN3) lediglich zwei Protokolle verwendet werden, die jeweils von einem Satz von Nachrichten zur Erfüllung einer speziellen Aufgabe gebildet werden, wobei die Zugehörigkeit einer Nachricht zu einem der beiden Protokolle als Bestandteil der Nachricht in die Nachricht eingetragen wird und das eine Protokoll der Kontrolle und Steuerung der Teilnehmeranschlußeinrichtungen (UP1 bis UP3, ..., UP7 bis UP9) und das andere Protokoll der dynamischen Zuteilung von Nutzkanälen zu den Teilnehmeranschlußeinrichtungen (UP1 bis UP3, ..., UP7 bis UP9) dient.

6. Vermittlungsstelle (LE) mit Mitteln, die so ausgestaltet sind, daß die Vermittlungsstelle (LE) mindestens ein logisches Zugangsnetz (LAN1, ..., LAN3) mit einer Vielzahl von Teilnehmeranschlußeinrichtungen (UP1 bis UP3, ..., UP7 bis UP9) steuert, **dadurch gekennzeichnet,**
**dass** die Vermittlungsstelle mit jeden der logischen Zugangnetzeüber eine einzige physikalische Verbindungsleitung (L1, ..., L3) verbindbar ist, wobei die Vermittlungsstelle (LE) und jeder der logischen Zugangsnetze (LAN1, ..., LAN3) über eine Vielzahl von Nutzkanälen Nutzdaten und über einen einzigen Steuerkanal Nachrichten austauschen, die der Übertragung von Daten oder der Steuerung jeder der logischen Zugangsnetze (LAN1, ..., LAN3) dienen, und wobei zur Steuerung jeder der logischen Zugansnetze (LAN1, ..., LAN3) lediglich zwei Protokolle verwendet werden, die jeweils von einem Satz von Nachrichten zur Erfüllung einer speziellen Aufgabe gebildet werden, wobei die Zugehörigkeit einer Nachricht zu einem der beiden Protokolle als Bestandteil der Nachricht in die Nachricht eingetragen wird und das eine Protokoll der Kontrolle und Steuerung der Teilnehmeranschlußeinrichtungen (UP1 bis UP3, ..., UP7 bis UP9) und das andere Protokoll der dynamischen Zuteilung von Nutzkanälen zu den Teilnehmeranschlußeinrichtungen (UP1 bis UP3, ..., UP7 bis UP9) dient.

## Claims

1. Method for controlling a physical access network (AN) with a multiplicity of user termination devices (UP1 to UP9) through an exchange (LE), in which the physical access network (AN) forms the basis for several logical access networks (LAN1 to LAN3) of the same type which are separately controlled and to which there is respectively assigned one group of the user termination devices (UP1 to UP3, UP4 to UP6, UP7 to UP9), **characterized in that** each of the logical access networks (LAN1 to LAN3) is connected to the exchange (LE) via a single physical connecting line (L1 to L3), in which each of the logical access networks (LAN1 to LAN3) exchanges with the exchange (LE) payload data, via a multiplicity of payload channels, and messages, via a single control channel, which serve to transmit data or to control the respective logical access network (LAN1 to LAN3), and in which, for the purpose of controlling each of the logical access networks (LAN1 to LAN3), only two protocols are used in each case, both of which are respectively formed by a set of messages for the performance of a particular task, the association of a message with one of the two protocols being entered in the message as a constituent part of the message, and the one protocol serving to monitor and control the user termination devices (UP1 to UP3, UP4 to UP6, UP7 to UP9) of the respective logical access network (LAN1 to LAN3) and the other protocol serving dynamically to allocate payload channels of the physical connecting line (L1 to L3) of the respective logical access network (LAN1 to LAN3) to user termination devices (UP1 to UP3, UP4 to UP6, UP7 to UP9) of the latter.

2. Method according to Claim 1, **characterized in that** one or more payload channels are used for the transmission of ISDN D-channel packet data.

3. Method according to Claim 1, **characterized in that** there is based on the physical access network (AN) at least one further logical access network (LAN4) of a different type, to which are assigned, in the event of failure of one of the homogeneous logical access networks (LAN1 to LAN3) or of the physical connecting line (L1 to L3) assigned to one of these logical access networks (LAN1 to LAN3), their assigned user termination devices (UP1 to UP3, UP4 to UP6, UP7 to UP9).

4. Method according to Claim 3, **characterized in that** the further logical access network (LAN4) is controlled by means of several protocols, and **in that** the reassignment of the user termination devices (UP1 to UP3, UP4 to UP6, UP7 to UP9) of a failed logical access network (LAN1 to LAN3) to the further logical access network (LAN4) is controlled by the exchange (LE) by means of one of these protocols.

5. Physical access network (AN) which is divided into at least two logical access networks (LAN1, ..., LAN3) with a multiplicity of user termination devices (UP1 to UP3, ..., UP7 to UP9), **characterized in that** each of the at least two logical access networks can be connected to an exchange (LE) via a single physical connecting line (L1, ..., L3), the exchange (LE) and each of the at least two logical access networks (LAN1, ..., LAN3) exchanging payload data, via a multiplicity of payload channels, and messages, via a single control channel, which serve to transmit data or to control each of the at least two logical access networks (LAN1, ..., LAN3) and, for the purpose of controlling each of the at least two logical access networks (LAN1, ..., LAN3), only two protocols being used, which are respectively formed by a set of messages for the performance of a particular task, the association of a message with one of the two protocols being entered in the message as a constituent part of the message and the one protocol serving to monitor and control the user termination devices (UP1 to UP3, ..., UP7 to UP9) and the other protocol serving dynamically to allocate payload channels to the user termination devices (UP1 to UP3, ..., UP7 to UP9).

6. Exchange (LE) with means which are of such design that the exchange (LE) controls at least one logical access network (LAN1, ..., LAN3) with a multiplicity of user termination devices (UP1 to UP3, ..., UP7 to UP9), **characterized in that** the exchange can be connected to each of the logical networks via a single physical connecting line (L1, ..., L3), the exchange (LE) and each of the logical access networks (LAN1, ..., LAN3) exchanging payload data, via a multiplicity of payload channels, and messages, via a single control channel, which serve to transmit data or to control each of the logical access networks (LAN1, ..., LAN3) and, for the purpose of controlling each of the logical access networks (LAN1, ..., LAN3), only two protocols being used, which are respectively formed by a set of messages for the performance of a particular task, the association of a message with one of the two protocols being entered in the message as a constituent part of the message and the one protocol serving to monitor and control the user termination devices (UP1 to UP3, ..., UP7 to UP9) and the other protocol serving dynamically to allocate payload channels to the user termination devices (UP1 to UP3, ..., UP7 to UP9).

## Revendications

1. Procédé de contrôle d'un réseau d'accès physique (AN) avec plusieurs dispositifs de raccordement des abonnés (UP1 à UP9) grâce à un central téléphonique (LE), dans lequel le réseau d'accès physique (AN) constitue la base de plusieurs réseaux d'accès logiques du même type (LAN1 à LAN3) qui sont contrôlés séparément et à chacun desquels un groupe de dispositifs de raccordement (UP1 à UP3, UP4 à UP6, UP7 à UP9) est attribué, **caractérisé en ce que** chacun des réseaux d'accès logiques (LAN1 à LAN3) est relié au central téléphonique (LE) par l'intermédiaire d'une seule ligne de jonction physique (L1 à L3), dans lequel chacun des réseaux d'accès logiques (LAN1 à LAN3) échange des données utiles avec le central téléphonique (LE) par l'intermédiaire de plusieurs canaux utiles et des informations par l'intermédiaire d'un seul canal de contrôle, qui servent à la transmission de données et au contrôle du réseau d'accès logique correspondant (LAN1 à LAN3), et dans lequel seulement deux protocoles sont utilisés pour le contrôle de chacun des réseaux d'accès logiques (LAN1 à LAN3), ces deux protocoles sont constitués chacun d'un ensemble d'informations pour l'exécution d'une tâche spéciale, l'appartenance d'une information à l'un des deux protocoles étant intégrée dans l'information en tant que partie intégrante de l'information, et l'un des protocoles servant à la vérification et au contrôle des dispositifs de raccordement des abonnés (UP1 à UP3, UP4 à UP6, UP7 à UP9) du réseau d'accès logique correspondant (LAN1 à LAN3) et l'autre protocole servant à l'allocation dynamique des canaux utiles de la ligne de jonction physique (L1 à L3) du réseau d'accès logique correspondant (LAN1 à LAN3) à ses dispositifs de raccordement des abonnés (UP1 à UP3, UP4 à UP6, UP7 à UP9).

2. Procédé selon la revendication 1, **caractérisé en ce qu'**un ou plusieurs canaux utiles sont utilisés pour la transmission de paquets de données sur le canal ISDN-D.

3. Procédé selon la revendication 1, **caractérisé en ce que**, au moins un autre réseau d'accès logique de type différent (LAN4) est basé sur le réseau d'accès physique (AN), auquel, en cas de défaillance d'un des réseaux d'accès logique du même type (LAN1 à LAN3) ou d'une des lignes de jonction (L1 à L3) appartenant à un de ces réseaux d'accès logiques (LAN1 à LAN3), sont attribués les dispositifs de raccordement des abonnés (UP1 à UP3, UP4 à UP6, UP7 à UP9) qui leur sont attribués

4. Procédé selon la revendication 3, **caractérisé en ce que** le réseau d'accès logique supplémentaire (LAN4) est contrôlé à l'aide de plusieurs protocoles et **en ce que** la réattribution du dispositif de raccordement des abonnés (UP1 à UP3, UP4 à UP6, UP7 à UP9) d'un réseau d'accès logique (LAN1 à LAN3) défaillant au réseau d'accès logique supplémentaire (LAN4) est contrôlé grâce au central téléphonique (LE).

5. Réseau d'accès physique (AN) partagé au moins en deux réseaux d'accès logiques (LAN1, ..., LAN3) avec plusieurs dispositifs de raccordement des abonnés (UP1 à UP3, ..., UP7 à UP9), **caractérisé en ce que** chacun des minimum deux réseaux d'accès logiques peut être relié à un central téléphonique (LE) par l'intermédiaire d'un seule ligne de jonction physique (L1, .... L3), le central téléphonique (LE) et chacun des minium deux réseaux d'accès logiques (LAN1, ..., LAN3) échangent des données utiles par l'intermédiaire de canaux utiles et des informations par l'intermédiaire d'un seul canal de contrôle, ces informations servent à la transmission de données ou au contrôle de chacun des minimum deux réseaux d'accès logiques (LAN1, ..., LAN3), et seulement deux protocoles étant utilisés pour le contrôle de chacun des minimum deux réseaux d'accès logiques (LAN1, ..., LAN3), ces protocoles sont constitués d'un ensemble d'informations pour l'exécution d'une tâche spéciale, l'appartenance d'une information à l'un des deux protocoles étant intégrée dans l'information en tant que partie intégrante de l'information et l'un des protocoles servant à la vérification et au contrôle des dispositifs de raccordement des abonnés (UP1 à UP3, ..., UP7 à UP9), et l'autre protocole servant à l'allocation dynamique des canaux utiles aux dispositifs de raccordement des abonnés (UP1 à UP3, ..., UP7 à UP9).

6. Central téléphonique (LE) avec des moyens configurés de telle sorte que le central téléphonique (IE) contrôle au moins un réseau d'accès logique (LAN1, ..., LAN3) avec plusieurs dispositifs de raccordement des abonnés (UP1 à UP3, ..., UP7 à UP9), **caractérisé en ce que** le central téléphonique (LE) peut être relié à chacun des réseaux d'accès logiques par l'intermédiaire d'une seule ligne de jonction physique (L1, ..., L3), le central téléphonique (IE) et chacun des réseaux d'accès logiques (LAN1, ..., LAN3) échangent des données utiles par l'intermédiaire de canaux utiles et des informations par l'intermédiaire d'un seul canal de contrôle, ces informations servent à la transmission de données ou au contrôle de chacun des réseaux d'accès logiques (LAN1, ..., LAN3) et seulement deux protocoles étant utilisés pour le contrôle de chacun des réseaux d'accès logiques (LAN1, ..., LAN3), ces protocoles étant constitués d'un ensemble d'informations pour l'exécution d'une tâche spécifique, l'appartenance d'une information à l'un des deux protocoles étant intégrée dans l'information en tant que partie intégrante de l'information et l'un des protocoles servant à la vérification et au contrôle des dispositifs de raccordement des abonnés (UP1 à UP3, ..., UP7 à UP9), et l'autre protocole servant à l'allocation dynamique des canaux utiles aux dispositifs de raccordement des abonnés (UP1 à UP3, ..., UP7 à UP9).
